Europäisches Patentamt

(19) European Patent Office

Office européen des brevets

(11) **EP 0 760 717 B1**

(12) **FASCICULE DE BREVET EUROPEEN**

(45) Date de publication et mention
de la délivrance du brevet:
**06.05.1998 Bulletin 1998/19**

(51) Int. Cl.[6]: **B08B 9/04**, G01M 3/00,
F16L 55/38, G01N 27/90

(21) Numéro de dépôt: **95922567.3**

(22) Date de dépôt: **06.06.1995**

(86) Numéro de dépôt international:
**PCT/FR95/00731**

(87) Numéro de publication internationale:
**WO 95/33584 (14.12.1995 Gazette 1995/53)**

(54) **DISPOSITIF MOBILE D'INTERVENTION A L'INTERIEUR DES CANALISATIONS DE PETIT DIAMETRE**

BEWEGLICHE VORRICHTUNG ZUM EINGREIFEN INNERHALB VON ROHRLEITUNGEN MIT KLEINEM DURCHMESSER

MOVABLE DEVICE FOR SERVICING SMALL DIAMETER PIPES

(84) Etats contractants désignés:
**DE GB IT NL**

(30) Priorité: **08.06.1994 FR 9407273**

(43) Date de publication de la demande:
**12.03.1997 Bulletin 1997/11**

(73) Titulaire: **S'Tell Diagnostic**
**69760 Limonest (FR)**

(72) Inventeur: **Kermabon, Christophe**
**92200 Neilly-sur-Seine (FR)**

(74) Mandataire:
**Somnier, Jean-Louis et al**
**c/o Cabinet Beau de Loménie,**
**232, Avenue du Prado**
**13295 Marseille Cédex 08 (FR)**

(56) Documents cités:
**WO-A-80/01841**          **CA-A- 2 085 048**
**DE-C- 828 173**          **FR-A- 2 689 210**
**GB-A- 2 088 554**        **US-A- 3 732 625**

• **Pipeline cleaners co. (FT.Madison,Iowa, USA)**

## Description

La présente invention a pour objet un dispositif mobile d'intervention à l'intérieur des canalisations de petit diamètre et qui pour la commodité des explications, peut être appelé racleur, terme généralement utilisé dans la profession.

Le secteur technique de l'invention est le domaine de la construction d'appareillage de mesure pour canalisations se déplaçant à l'intérieur de celle-ci d'une manière quasi autonome grâce à la poussée, sur un tel dispositif appelé donc "racleur", d'un produit transporté dans cette canalisation.

Un des objectifs et applications de l'invention est de pouvoir effectuer des mesures de corrosion depuis l'intérieur de canalisations de petit diamètre, tels que de 2 à 6 pouces, soit 50 à 150 mm sur d'assez grandes distances et quelle que soit leur configuration.

On connaît en effet des systèmes de racleur articulé qui assure le déplacement d'appareillage de mesure, soit incorporé au racleur lui-même, soit tracté derrière celui-ci à la manière d'un wagon. On peut citer par exemple la demande de brevet FR 2689210 publiée le 1er octobre 1993, décrivant un de ces racleurs moteurs articulés, et rappelant l'état de l'art dans ce domaine et les problèmes posés par de tels systèmes : ce document nous enseigne en effet un "racleur articulé pour la modification, l'entretien et l'inspection de canalisations, notamment pour le transport de produits pétroliers du type comprenant au moins deux corps tubulaires identiques ou wagons, disposés dans l'alignement l'un de l'autre et munis chacun sur sa paroi extérieure, de coupelles annulaires, souples et résistantes, de diamètre extérieur sensiblement égal au diamètre intérieur de la canalisation, et tel que les deuxdits au moins deux wagons sont en simple contact par leur extrémité adjacente et sont reliés mécaniquement entre eux au moyen d'un élément de liaison élastique souple, tel qu'un câble ou un ressort qui traverse coaxialement les chambres intérieures des deux wagons et qui exerce sur ces derniers des forces de traction antagonistes tendant à appliquer leur extrémité adjacente l'une contre l'autre".

Un tel système permet effectivement de franchir des zones de raccordement sans perte de contact d'au moins une coupelle avec les parois pour assurer la continuité de propulsion, tout en permettant de passer des portions coudées sans nécessiter de système d'articulation à rotule ou à bielle et cardan, tel qu'il en existe par ailleurs, et qui, soit sont fragiles, soit augmentent par leur poids l'usure des coupelles de supportage : cependant, la nécessité d'avoir alors deux corps tubulaires disposant chacun de deux coupelles au moins annulaires, situées à une certaine distance l'une de l'autre, ne permettent pas, sans risque de coincement, le passage d'un tel racleur dans des portions fortement coudées et à faible rayon de courbure, tel que par exemple 1,5 fois le diamètre de la canalisation sur 90°, comme c'est pourtant souvent le cas dans des réseaux de canalisations, surtout quand celles-ci sont de petit diamètre; celles-ci du reste ne permettent pas d'autant plus l'utilisation d'articulations à rotule ou à cardan qui ne peuvent pas alors absorber, comme du reste le système de liaison de la demande de brevet citée précédemment, des débattements entre les axes des éléments articulés, par rapport à celui de la canalisation, sauf à écraser et à déformer les coupelles qui risquent alors soit un blocage mécanique du dispositif dans le coude, soit de perdre de leur étanchéité et donc de toute façon, de bloquer le dispositif.

Le problème principal posé est en effet de pouvoir réaliser un piston moteur, utilisable soit tout seul, soit pour tracter d'autres racleurs wagons portant divers équipements de mesures, et pouvant se déplacer seul ou avec ses wagons à l'intérieur de canalisations ayant des portions coudées jusqu'à 90°, et de rayon de courbure, à partir de 1,5 fois le diamètre de passage, et des zones de raccordement avec d'autres portions de canalisations et dont il faut alors franchir la rupture de paroi ainsi provoquée, lequel diamètre de passage pourra être de 50 mm au moins.

Un autre objectif de la présente invention est de pouvoir réaliser un dispositif de mesure autonome tractable par ledit piston moteur sur des distances allant jusqu'à au moins 12 km et permettant en particulier une mesure de corrosion en continu, de la paroi de la canalisation sur toute cette distance.

Une solution au problème posé est un dispositif mobile d'intervention, comprenant un piston moteur composé d'au moins deux coupelles annulaires tractrices, comportant chacune une jupe périphérique de même diamètre extérieur, souple et résistante, et délimitant chacune une section de surface intérieure étanche et au moins une troisième coupelle de centrage non étanche disposée entre les deux dites coupelles tractrices et dont les supports desdites coupelles sont reliés deux à deux axialement par un câble de traction et par un ressort fixé et prenant appui à chacune de ses extrémités sur lesdits supports de deux coupelles consécutives, entourant et maintenant ledit câble en tension en position de flexion latérale, soit dans le passage des coudes, le ressort servant seul d'élément de traction dans les sections linéaires de la canalisation.

Pour des canalisations de 50 à 100 mm de diamètre intérieur, la distance entre les bords extérieurs des jupes de deux coupelles consécutives est de préférence de 45 à 50 mm, avec une longueur du ressort de 30 à 35 mm pour un diamètre de celui-ci de 25 à 30 mm et un nombre de spires de 7 ou 8 : l'existence de ce ressort, outre le maintien en tension du câble de liaison qui assure la traction, surtout durant le franchissement des coudes, permet de donner une rigidité mécanique à la liaison entre coupelles et d'assurer leur centrage entre elles, surtout en ligne droite, puisqu'en cas de déviation d'une coupelle par rapport à l'autre, leur ressort de liaison leur applique un couple de rappel qui les ramène dans l'alignement.

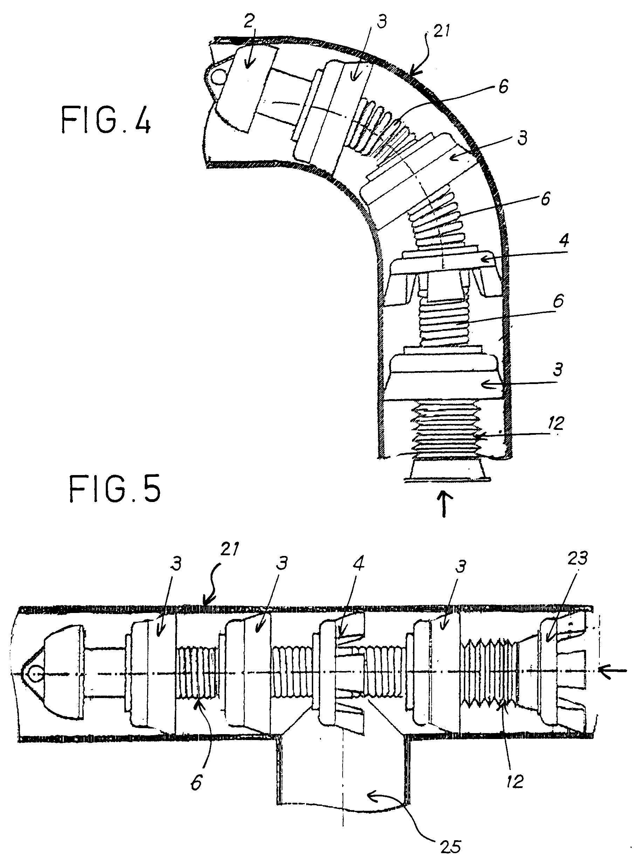

De préférence, toutes lesdites coupelles, centreuses ou tractrices, sont interchangeables sur des mêmes supports, à la fois pour ledit piston moteur défini précédemment et pour les modules wagons décrits ci-après : ceci permet d'une part, le remplacement en cas d'usure et d'autre part, l'utilisation des mêmes éléments mécaniques de traction, de liaison et de module wagon pour des canalisations de diamètre différent : en conservant ainsi par exemple ceux dont les dimensions sont données ci-dessus, avec les mêmes supports de coupelles, qui peuvent donc avoir un diamètre extérieur minimum de 50 mm, on peut aller jusqu'à des diamètres de canalisations de 100 mm; cependant pour des diamètres de canalisations et de coupelles supérieurs à 75 mm, il faut rajouter une troisième coupelle annulaire tractrice de même diamètre que les deux autres, située en tête dudit racleur, afin d'allonger celui-ci et permettre ainsi le franchissement de raccordement; ainsi, on est sûr en effet qu'au moins une desdites coupelles tractrices se trouve en prise étanche d'un côté ou de l'autre dudit raccordement et assure alors la poussée du fluide porteur, et donc la traction de l'ensemble : un exemple d'un tel franchissement est donné dans la figure 5.

Pour aider au franchissement des parties courbes, ledit racleur porte également de préférence un guide avant dont la surface externe est de forme arrondie et de révolution, qui est relié rigidement à la coupelle tractrice de tête, et d'un diamètre maximum extérieur inférieur à celui minimum de celle-ci : un tel guide est forme de nez avant, pénétrant en premier dans une courbe, s'appuie sur la paroi intérieure du plus grand diamètre de courbure de celle-ci qui le force alors à la suivre, tel que représenté sur la figure 4, donnant ainsi une précourbure au piston moteur qui amorce sa flexion autorisée par le premier ressort séparant les premières coupelles, puis continue de se plier en suivant lui aussi la courbe du coude grâce aux autres ressorts.

Le résultat est un nouveau dispositif mobile d'intervention à l'intérieur des canalisations de petit diamètre, comprenant au moins un piston moteur pouvant effectivement, sans perdre sa capacité de traction potentielle, franchir des portions coudées et de raccordement de canalisations, telles que celles décrites dans le problème posé et sans les inconvénients des systèmes connus à ce jour.

De plus, quand on veut pouvoir réaliser des mesures à l'intérieur de telles canalisations, ledit piston moteur peut être utilisé en tant que tracteur du dispositif comportant alors en plus au moins un module wagon composé d'au moins deux coupelles centreuses non étanches, situées l'une derrière l'autre, de même diamètre externe et solidaires d'un corps rigide qui les relie, les supporte et renferme au moins un équipement d'intervention dans ladite canalisation, lequel premier module wagon étant relié à l'avant audit racleur et éventuellement à l'arrière avec le suivant, puis entre eux, les uns derrière les autres, par une chaîne à chaque liaison, comportant au moins deux maillons, fixés librement à des supports d'accrochage, solidaires d'une extrémité d'un desdits wagons et pour l'un, l'arrière du piston moteur. De préférence et d'une manière optimum deux maillons suffisent car un maillon supplémentaire risque de frotter dans des coudes de faible rayon. L'utilisation de tels ensembles de liaison à chaîne limite la rotation des wagons les uns par rapport aux autres, grâce à leur effet anti-giratoire, tout en laissant une certaine liberté de mouvements aux wagons surtout dans le débattement alors autorisé de leur axe par rapport à celui de la canalisation, en particulier dans les courbes, et les uns par rapport aux autres, contrairement aux systèmes à cardan ou à bielle qui se coincent alors dans de tels coudes tels que ceux définis ci-dessus; de plus, lesdites chaînes peuvent assurer, comme les câbles et ressorts de liaison entre les coupelles du piston moteur, des tractions de l'ordre d'au moins 300 kg.

Pour assurer une mesure de corrosion en continu sur toute la distance d'une canalisation telle que sur 12 km au moins, le dispositif suivant l'invention, comporte au moins cinq modules wagons reliés l'un derrière l'autre audit piston moteur défini ci-dessus, et dont l'un d'alimentation comporte une batterie électrique, un autre comporte au moins une bobine émettrice de champ magnétique, un autre une bobine réceptrice dudit champ magnétique, un autre une roue odométrique de mesure de distance, et un autre une unité centrale associée à une capacité mémoire, l'ensemble du dispositif ayant une longueur maximum de 1,50 mètres; l'ensemble desdits modules wagons étant relié encre eux par des câbles d'alimentation et de transfert d'informations avec, dans le dernier wagon situé à l'arrière du dispositif, un connecteur permettant de brancher tout équipement externe compatible pour y transférer le contenu de la mémoire ayant stocké les informations de mesures en cours de trajet; ce branchement peut ainsi être réalisé juste après l'intervention et peut permettre ainsi une exploitation des résultats immédiatement.

La disposition du dispositif ci-dessus utilise le principe de mesure connu de corrosion par des méthodes électromagnétiques à champ lointain par courant de Foucault : une bobine dite émettrice, réalisée par un solénoïde monté axialement dans l'appareil, est parcourue par un courant électrique qui, appliqué à ladite bobine, génère ainsi un champ magnétique qui se trouve couplé á la bobine réceptrice à travers la canalisation : la différence de phase entre le signal d'émission et celui induit à la réception est proportionnelle à la quantité de métal située au droit des bobines réceptrices et émettrices. Plusieurs facteurs affectent en effet cette différence de phase entre le courant émis et la tension induite et l'épaisseur de la canalisation s'obtient à partir d'une relation du type

$$E = \delta \times \frac{\Phi,}{114,6}$$

dans lequel $\Phi$ est le décalage de phase, et $\delta$ est dite l'épaisseur de peau telle que :

$$\delta = \frac{1}{\sqrt{\pi \mu f \alpha}}$$

, où $\mu$ est la perméabilité, f est la fréquence d'excitation et $\alpha$ est la conductivité métallique.

Ce principe de mesure est préférentiellement retenu dans le cadre de la présente invention, pour répondre à l'objectif de mesures de corrosion, tout en satisfaisant aux contraintes géométriques des canalisations de petit diamètre et à celles de la puissance énergétique qui est déterminée par des limites opérationnelles à atteindre en terme d'autonomie pour assurer la mesure sur de grandes distances : un tel système de mesures n'est en effet pas un trop gros consommateur d'énergie.

Certes, il existe d'autres principes et méthodes de mesure d'épaisseurs utilisés pour des canalisations tels que par flux magnétique dans lequel on mesure la déformée des lignes de champ provoquée par un défaut tel qu'une perte de métal et qui nécessite une technique multicapteurs : ceci fonctionne correctement pour les canalisations de gros diamètre mais est difficilement miniaturisable car, outre un grand nombre de capteurs, cette technique nécessite beaucoup d'énergie. Il existe également des méthodes soniques également multicapteurs par mesure des échos réfléchis sur les parois interne et externe du tube, mais qui nécessitent également, outre plusieurs capteurs, une énergie importante et de toute façon sont difficilement applicables aux canalisations de transport de gaz.

Il est certain cependant que le système de mesures électromagnétiques à champ lointain par courant de Foucault, tel que retenu dans la présente invention, ne permet pas de déterminer la position radiale angulaire exacte du défaut dans une section de canalisation donnée; mais si cela peut être intéressant pour une canalisation de gros diamètre afin de permettre sa réparation à l'endroit précis concerné, pour une canalisation de petit diamètre, la réparation consistera de toute façon à changer l'ensemble du tronçon repéré sans se soucier de la position angulaire du défaut.

La combinaison d'un tel système de mesures de corrosion dans un ensemble mécanique souple, articulé, comprenant un piston moteur, des modules wagons et divers systèmes de liaison tels que décrits précédemment et ci-après, constitue un dispositif nouveau, spécifique et opérationnel répondant aux problèmes et aux objectifs posés, sans avoir les inconvénients des systèmes actuels.

On pourrait citer d'autres avantages de la présente invention. mais ceux cités ci-dessus en montrent déjà suffisamment pour en prouver la nouveauté et l'intérêt. La description et les figures ci-après représentent des exemples de réalisation de l'invention mais n'ont aucun caractère limitatif.

D'autres réalisations sont possibles dans le cadre de la portée de l'étendue de cette invention, en particulier en utilisant soit le dispositif piston moteur seul, soit combiné avec différents modules wagons comportant des systèmes de mesures qui peuvent être autres que la mesure de corrosion; par ailleurs, en ce qui concerne la dimension des canalisations dans lesquelles on veut intervenir, les dispositifs tels que décrits ci-après peuvent convenir pour des diamètres spécifiquement de 50 à 150 mm de préférence, et permettant de franchir des parties coudées tels que définis précédemment, mais dans des canalisations de plus gros diamètre, il peut être préférable de disposer ces mêmes différents modules, constituant les modules wagons pour des petits diamètres, en parallèle, en disposition de type barillet, de façon à diminuer la longueur totale du dispositif; il est évident également que les éléments mécaniques de liaison entre coupelles du racleur moteur et entre module wagon, suivant le même principe que ceux décrits précédemment et ci-après, même s'ils peuvent s'adapter à différentes diamètres de canalisations, code déjà indiqué, peuvent avoir également des dimensions différentes en fonction de celles des canalisations pour lesquelles le dispositif mobile suivant l'invention est destiné.

La figure 1 est une vue en coupe longitudinale d'un piston moteur ou tracteur suivant l'invention.

La figure 2 est une vue en coupe longitudinale d'un ensemble de liaison entre un piston moteur ou tracteur et un wagon ou entre deux wagons.

La figure 3 est une vue d'ensemble en coupe d'une canalisation, à l'intérieur de laquelle se déplace un dispositif mobile complet, comportant un piston moteur et un certain nombre de modules wagons d'instrumentation.

La figure 4 est une vue en position du piston moteur s'insérant dans un coude à 90°, dont le rayon de courbure est de 1,5 fois le diamètre de la canalisation.

La figure 5 est une vue en coupe d'un piston moteur en train de franchir une zone de raccordement de la canalisation.

La figure 6 est une vue en coupe d'un wagon module d'alimentation dans une canalisation.

La figure 7 est une vue en coupe longitudinale d'un wagon module d'émission ou de réception d'un champ électromagnétique de mesure de corrosion.

La figure 8 est une vue en coupe longitudinale d'un wagon module portant une roue odométrique.

La figure 9 est une vue en coupe longitudinale d'un wagon module portant une unité centrale et une capacité de mémoire, et pouvant être placé en dernière position à l'arrière du dispositif mobile.

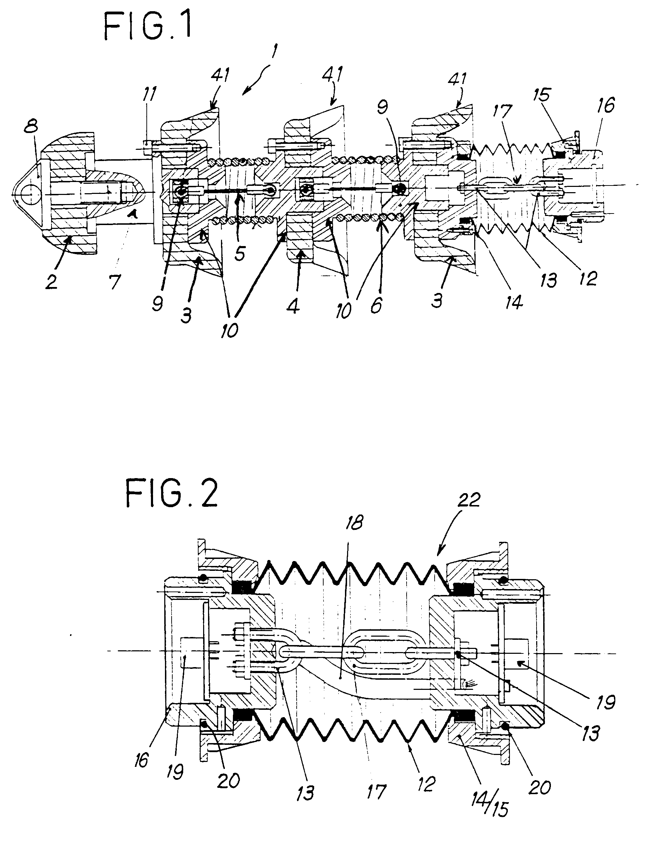

Le piston moteur 1, tel que représenté sur la figure 1, est composé d'au moins deux coupelles annulaires tractrices 3, souples, résistantes et délimitant une surface interne étanche en forme de cloche, dont la concavité est ouverte vers l'arrière du racleur, afin que la pression d'un fluide pénétrant dans la canalisation où est positionné ledit racleur, ouvre desdites coupelles pour que leur jupe extérieure 41 vienne s'appuyer sur les parois internes de la canalisation, quels que soient les défauts éventuels de celles-ci : l'étanchéité relative ainsi obtenue transforme alors la pression du fluide en force de poussée qui permet au piston moteur 1 de se déplacer à l'intérieur de la canalisation et d'entrainer derrière lui différents modules wagons 23, tels que ceux décrits dans les figures suivantes. De tels dispositifs "racleurs" à coupelles sont connus, mais dans la présente invention, ledit piston moteur 1 comporte au moins, en plus, une troisième coupelle 4 de centrage, dont la jupe 41 n'est pas étanche mais doit être simplement souple et assurer une fonction de guidage des éléments de liaison entre les coupelles tractrices 3 en assurant une distance suffisante entre deux d'entre elles pour permettre le passage d'une zone de raccordement tel que représenté sur la figure 5. En effet, un tel raccordement 25 qui peut être en T ou en Y présente une rupture de continuité des parois de la canalisation 21 dans laquelle se déplace le racleur et, lors du franchissement de ce raccordement, quand une des coupelles tractrices 3 se trouve au milieu de l'ouverture de ce raccordement 25, l'autre coupelle tractrice 3 doit être à une certaine distance de la première. soit en amont, soit en aval dans la partie où la canalisation n'est pas interrompue par ladite ouverture afin d'assurer l'étanchéité et la traction voulues.

De plus, les supports 10 desdites coupelles 3 ou 4 qui peuvent être constitués de tout système de type à brides prenant en sandwich par exemple lesdites coupelles, et assemblés par tout type de fixation de type à vis 11, sont reliés deux à deux axialement par un câble 5 et un ressort 6 fixé et prenant appui à chacune de ses extrémités sur lesdits supports 10 de coupelles; en déplacement en ligne droite le ressort 6 assure seul la traction entre les coupelles, le câble 5 étant détendu. Entourant ledit câble 5 d'une manière symétrique, le ressort 6 tend celui-ci dans les coudes, et c'est le câble qui, par effet de couple avec la partie intérieure du ressort dont les spires restent en appui, assure le passage des coudes.

Pour une distance donnée entre les extrémités des jupes 41 des coupelles tractrices 3, tel que défini précédemment pour des diamètres de canalisations de 50 à 75 mm de diamètre intérieur par exemple, si on veut utiliser le même piston moteur jusqu'à 100 mm de diamètre, en changeant uniquement le diamètre des coupelles, il est nécessaire alors de disposer d'une troisième coupelle annulaire tractrice 3 située en tête du piston moteur, tel que représenté sur les figures 4 ou 5 : cette troisième coupelle tractrice permet le passage du raccordement 25 qui offre bien sûr alors une ouverture plus grande dans la canalisation de transport 21 et donc une rupture sur une plus grande longueur de la paroi à franchir.

Tel que représenté sur la figure 4, pour aider la mise en flexion du racleur dans un coude de forte courbure telle que 1,5 fois le diamètre de la canalisation et à 90°, ledit pis ton moteur comporte un guide 2 avant, dont la surface externe est de forme arrondie et de révolution, et qui est relié rigidement par exemple par un bloc de liaison 7 au support 10 de la coupelle tractrice de tête : ce guide 2 force ainsi la rotation de la première coupelle tractrice 3 par rapport à la suivante qui, tirée par le câble de liaison 5, est cependant maintenue centrée et guidée par le ressort 6 dont les spires jointives s'appuient à la partie intérieure du coude, alors qu'elles s'écartent à la partie extérieure, provoquant un effet de rappel des coupelles l'une par rapport à l'autre dans et après le franchissement du coude.

Ledit guide avant peut comporter une vis d'assemblage et d'accrochage 8 de tête et lesdits câbles 5 peuvent être fixés sur les supports 10 porte-coupelles par tout type d'attache 9, tel que des axes.

A l'arrière de ce piston moteur 1, quand il est utilisé pour tracter différents modules wagons tels que représentés dans les figures suivantes, un ensemble de liaison à chaîne 22, tel que représenté plus en détail sur la figure 2, est composé essentiellement par un morceau de chaîne comportant au moins deux maillons 17 : ceux-ci sont fixés par tout dispositif de type étrier 13 à des éléments de raccordement tels que des bouchons 16, venant s'insérer dans les corps rigides 24 des modules wagons tels que représentés sur les figures suivantes. Lesdits éléments de raccordement 16 sont fixés auxdits modules wagons par des systèmes de type à brides 15 qui peuvent également servir de fixation d'extrémité d'un soufflet 12 de protection de la chaîne et d'un câble de liaison 18 entre deux wagons successifs. Ledit câble de liaison 18 étant alors connecté à ses extrémités à des connecteurs 19 situés dans lesdits bouchons 16 et qui permettent le branchement des systèmes embarqués dans chaque module wagon situé de part et d'autre dudit ensemble de liaison 22.

Pour assurer l'étanchéité de l'intérieur du volume intérieur du corps 24 de ces modules dans lesquels viennent s'insérer lesdits bouchons de liaison 16, des joints toriques 20 peuvent être disposés en périphérie sur lesdits bouchons 16 et viennent alors en contact sur le diamètre intérieur dudit corps rigide 24, assurant ladite étanchéité.

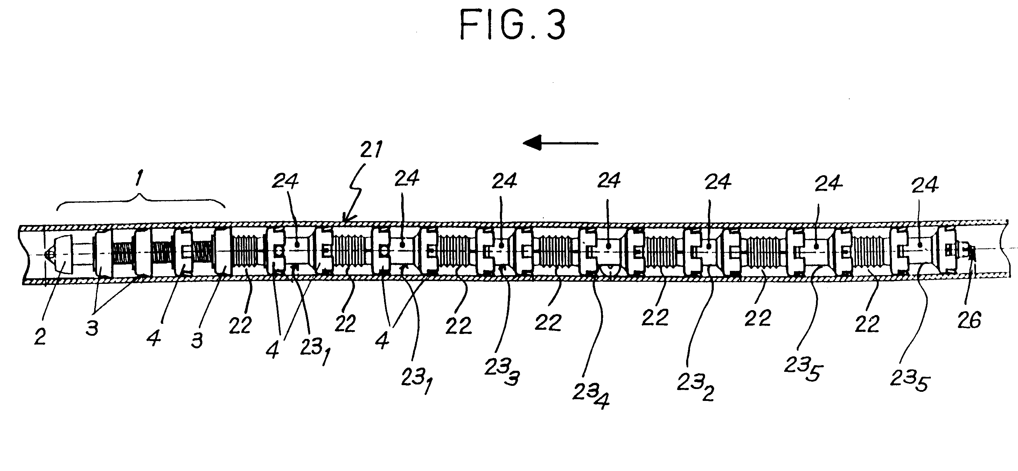

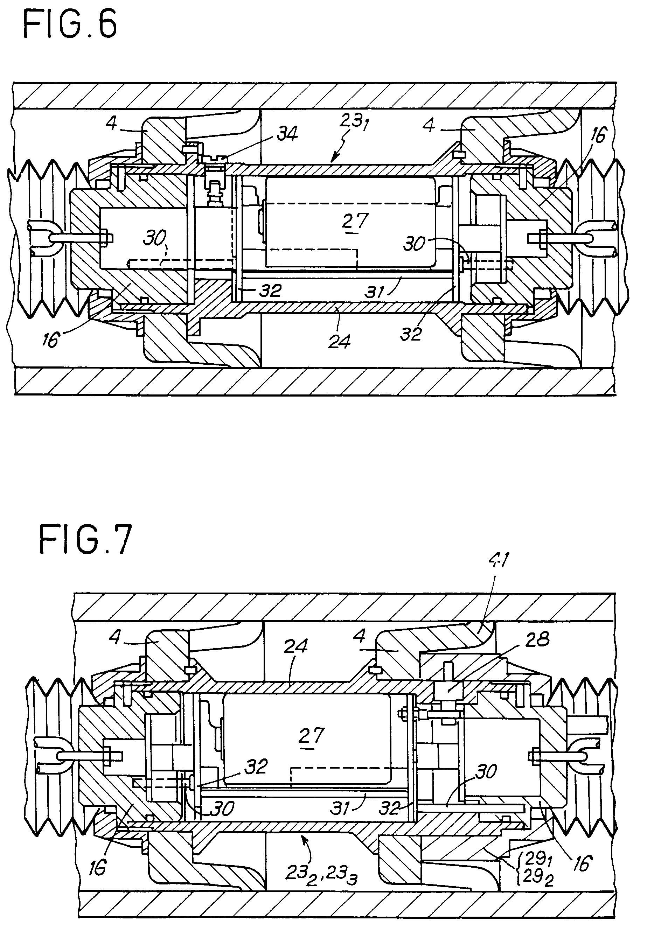

Suivant la représentation des figures 6 à 9 et celle d'ensemble de la figure 3, lesdits wagons 23 sont composés d'au moins deux coupelles centreuses 4, dont les jupes 41 ne sont pas étanches pour permettre le passage du fluide jusqu'à celles tractrices de l'élément moteur 1; lesdites coupelles centreuses 4 étant solidaires d'un corps rigide 24 qui les supporte et qui renferme divers équipements d'instrumentation tels que définis ci-après.

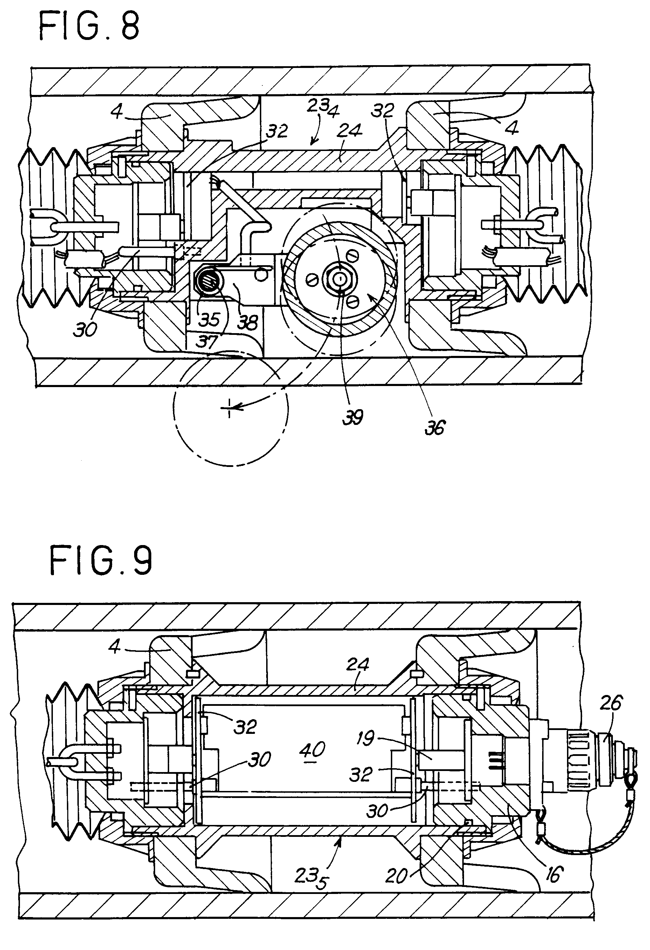

En particulier, sur la figure 9 représentée, l'un $23_5$ au moins des wagons comportant une unité centrale 40, associée à une capacité mémoire permettant de stocker toutes les informations de mesures pouvant être relevées par tout système de mesures embarqué dans ledit dispositif, tels que ceux décrits dans les autres modules wagons représentés sur les figures 7 à 9. Cedit wagon module $23_5$ est constitué des mêmes éléments mécaniques et d'assemblage que tous les autres et peut comporter en particulier, outre les éléments déjà décrits précédemment, des plaques supports intérieures 32 de ladite unité centrale 40 et de divers autres éléments tels que batterie d'appoint ou mémoire, et diverses tiges de centrage 30 permettant l'assemblage des divers éléments au cours de leur montage.

De préférence, ce wagon $23_5$ comportant au moins une mémoire de stockage de l'ensemble des informations relevées lors de l'intervention par ledit dispositif mobile "racleur", est situé à l'arrière de celui-ci et comporte un connecteur 26 permettant de brancher tout équipement extérieur compatible, pour y transférer le contenu de ladite mémoire; ledit connecteur 26 comporte un bouchon d'étanchéité fermé pendant l'intervention de la canalisation et est monté sur un bouchon 16 venant fermer le corps rigide 24 dudit module wagon $23_5$, code ceux constituant un élément de raccordement décrits précédemment.

Sur la figure 6 est représenté un module wagon de type alimentation $23_1$ comportant une batterie 27 électrique, ainsi qu'une commande de commutateur de mise en route 34 accessible de l'extérieur par un système de type à vis pour permettre la mise sous tension et le démarrage de la mesure lors de l'introduction du dispositif dans la canalisation à contrôler. Un tel module $23_1$ peut également comporter, comme les autres modules, un support de liaison 31 entre les plaques supports 32 intérieures et différents composants électroniques : la batterie 27, comme toutes celles d'appoint pouvant être embarquées dans divers autres modules, est de préférence une batterie au lithium, permettant un maximum de capacité de stockage d'énergie électrique pour un volume minimum. D'autres éléments wagons modules d'alimentation peuvent être disposés en série ou en parallèle et permettre par exemple, chacun l'alimentation d'un système de mesures ou de l'unité centrale 40 du module $23_5$.

Pour permettre l'utilisation du principe de mesure électromagnétique à champ lointain par courant de Foucault, tel que défini précédemment, l'un $23_2$ au moins des wagons comporte une bobine émettrice $29_1$ telle que représentée sur la figure 7, créant alors un champ magnétique autour dudit wagon $23_2$, disposée circulairement autour d'une partie du corps rigide 24 de celui-ci et protégée extérieurement par la jupe 41 d'une des coupelles centreuses 4 dudit wagon $23_1$; celui-ci peut également comporter dans le volume disponible de son corps rigide 24 central, une batterie d'alimentation d'appoint complémentaire 27, et un contact 28 traversant ledit corps rigide 24 permet la liaison étanche électrique entre ladite bobine $29_1$ située à l'extérieur de celui-ci et l'intérieur.

Pour avoir une distance suffisante entre la bobine

émettrice $29_1$ et la bobine réceptrice $29_2$, cette dernière est disposée sur un autre wagon $23_3$ identique à celui décrit précédemment pour la bobine émettrice $29_1$ et pour lequel la même figure 7 et la même description que ci-dessus peuvent donc s'appliquer.

S'il n'est pas possible avec un dispositif de mesures tel que décrit précédemment, de connaître la position d'un défaut radialement dans la section de la canalisation, la position en distance de ce défaut par rapport au point de départ de la mesure dans la canalisation est nécessaire pour déterminer l'endroit où doit être effectuée une éventuelle réparation : pour cela. l'un $23_4$ au moins des wagons du dispositif suivant l'invention et tel que représenté sur la figure 8, comporte une roue odométrique 36 disposée entre les deux coupelles 4 centreuses dudit wagon $23_4$ qui supporte ladite roue 36, laquelle est nontée sur un bras 38 pivotant autour d'un axe 37 et est associée à un ressort 35 de rappel tendant à la faire sortir hors du volume dans lequel s'inscrit ledit wagon $23_4$; lequel bras 38 peut rentrer à l'intérieur de celui-ci, de telle façon que ladite roue 36 s'escamote dans un volume cylindrique au plus égal à celui occupé par le corps cylindrique 24 dudit wagon $23_4$.

La roue montée ainsi entre les deux coupelles centreuses et porteuse dudit module, grâce au système à ressort et à son bras pivotant 38, est toujours en contact avec la paroi de la canalisation 21, ce qui permet ainsi une bonne précision de mesure de distance, meilleure que dans beaucoup d'autres systèmes existant à ce jour : en effet, ceux-ci comportent une roue odométrique mais placée en porte à faux à l'arrière des dispositifs elle perd donc souvent le contact avec la paroi de la canalisation dans les zones de courbure : dans le dispositif représenté sur la figure 8, la roue pouvant à la fois rentrer à l'intérieur du volume défini par lesdites coupelles peut être située à l'intérieur de la courbure, sans risquer de bloquer le dispositif, et à l'inverse, pouvant sortir de ce volume dans une position assez extrême tel que représenté en pointillé sur la figure, celle-ci peut être située à l'extérieur de la courbure dans un coude sans perdre le contact : le système de comptage de distance proprement dit peut être constitué par tout équipement connu tel qu'un capteur de proximité solidaire du bras 38 de la roue et un excitateur solidaire de celle-ci qui donne donc une impulsion à chaque passage devant ledit capteur de proximité.

Sur la figure 3 est représenté un exemple d'un dispositif mobile complet, suivant l'invention, comportant outre un piston moteur 1 en tête, sept wagons modules reliés l'un derrière l'autre à cedit piston moteur et dont deux d'entre eux sont d'alimentation $23_1$: l'un $23_3$ porte la bobine émettrice $29_1$ du champ magnêtique tel que décrit dans la figure 7 et le module $23_2$ situé deux modules en arrière du précédent pour avoir un champ lointain plus marqué, porte la bobine réceptrice $29_2$ dudit champ magnétique; entre ces deux modules $23_2$ et $23_3$, est situé le module $23_4$ portant la roue odométrique, alors que les deux derniers modules $23_5$ compor-

tent éventuellement pour l'un, une unité centrale de commande et contrôle de l'ensemble du dispositif et l'autre, une mémoire complémentaire. Il est certain que l'ordre de disposition desdits modules peut être changé et leur nombre augmenté ou diminué, sachant que l'ensemble dudit dispositif mobile ne doit généralement pas dépasser une longueur de 1,50 m pour être compatible avec les gares prévues pour envoyer de tels dispositifs dans les canalisations à contrôler, ce qui est parfaitement possible dans le cadre des éléments décrits et tels que réalisés grâce à la présente invention.

## Revendications

1. Dispositif mobile d'intervention à l'intérieur des canalisations de petit diamètre comprenant un piston moteur (1) composé d'au moins deux coupelles annulaires tractrices (3), comportant chacune une jupe périphérique (41) de même diamètre extérieur, souple et résistance et délimitant chacune une section de surface intérieure étanche, caractérisé en ce que ledit piston moteur (1) comporte au moins une troisième coupelle (4) de centrage non étanche disposée entre les deux dites coupelles tractrices (3) et que les supports (10) desdites coupelles (3, 4) sont reliées deux à deux axialement par un câble (5) de traction et par un ressort (6) fixé et prenant appui à chacune de ses extrémités sur lesdits supports (10) de deux coupelles consécutives, en courant et mettant en tension ledit câble (5) en position de flexion latérale.

2. Dispositif selon la revendication 1, caractérisé en ce que ledit piston moteur (1) comporte une troisième coupelle annulaire tractrice (3) de même diamètre que les deux autres et située en tête dudit racleur.

3. Dispositif selon l'une quelconque des revendications 1 ou 2, caractérisé en ce que ledit piston moteur (1) comporte un guide (2) avant dont la surface externe est de forme arrondie et de révolution, d'un diamètre maximum extérieur inférieur à celui minimum desdites coupelles (3, 4), et qui est relié rigidement à la coupelle tractrice (3) de tête.

4. Dispositif selon l'une quelconque des revendications 1 à 3, caractérisé en ce qu'il comporte au moins un module wagon (23) composé d'au moins deux coupelles centreuses (4) non étanches, situées l'une derrière l'autre, de même diamètre externe, et solidaires d'un corps rigide (24) qui les relie, les supporte, et renferme au moins un équipement d'intervention dans ladite canalisation, lequel premier module wagon (23) étant relié à l'avant audit piston moteur (1), et éventuellement à l'arrière avec le suivant, puis entre eux, les uns derrière les autres, par une chaîne (17) à chaque liaison, comportant au moins deux maillons fixés librement à des supports d'accrochage (13), solidaires d'une extrémité d'un desdits wagons (23) et pour l'un, de l'arrière du racleur (1).

5. Dispositif selon l'une quelconque des revendications 1 à 4, caractérisé en ce que toutes lesdites coupelles (3, 4) sont interchangeables sur les mêmes supports (10) et leur diamètre extérieur minimum est de 50 mm.

6. Dispositif selon la revendication 4, caractérisé en ce que l'un ($23_1$) au moins des wagons comporte une unité centrale (40) associée à une capacité mémoire permettant de stocker toutes les informations de mesures pouvant être relevées par tout système de mesures embarqué dans ledit dispositif et le dernier wagon situé à l'arrière de celui-ci comporte un connecteur (26) permettant de brancher tout équipement extérieur compatible pour y transférer le contenu de ladite mémoire.

7. Dispositif selon la revendication 4, caractérisé en ce que l'un ($23_4$) au moins des wagons comporte une roue odométrique (36) disposée entre les deux coupelles (4) centreuses dudit wagon ($23_4$) qui supporte ladite roue (36), laquelle est montée sur un bras (38) pivotant autour d'un axe (37), et est associée à un ressort (35), de rappel tendant à la faire sortir hors du volume dans lequel s'inscrit ledit wagon ($23_4$), lequel bras (38) pouvant rentrer à l'intérieur de celui-ci, de telle façon que ladite roue (36) s'escamote dans un volume cylindrique au plus égal à celui occupé par le corps rigide (24) dudit wagon ($23_4$).

8. Dispositif selon la revendication 4, caractérisé en ce que l'un ($23_2$) au moins des wagons comporte une bobine émettrice ($29_1$) créant un champ magnétique autour dudit wagon ($23_2$), disposée circulairement autour d'une partie du corps rigide (24) de celui-ci et protégée extérieurement par la jupe (41) d'une desdites coupelles centreuses (4) dudit wagon ($23_2$).

9. Dispositif selon la revendication 8, caractérisé en ce que l'un ($23_3$) au moins des wagons comporte une bobine réceptrice ($29_2$) mesurant le champ magnétique crée par la bobine émettrice ($29_1$), et disposée également circulairement autour d'une partie du corps rigide (24) dudit wagon ($23_3$) et protégée par la jupe (41) d'une desdites coupelles centreuses de celui-ci.

10. Dispositif mobile selon la revendication 9, caractérisé en ce qu'il comporte au moins cinq modules wagons (23) reliés l'un derrière l'autre audit piston moteur (1), dont l'un d'alimentation ($23_1$) comporte une batterie (27) électrique, un autre ($23_2$) comporte au moins la bobine émettrice (29) de champ magnétique, un autre ($23_3$) comporte ladite bobine réceptrice (29) dudit champ magnétique, un autre ($23_4$) comporte une roue odométrique de mesure de distance, et un autre ($23_5$) une unité centrale (40) associée à une capacité mémoire, l' ensemble du dispositif ayant une longueur maximale de 1,50 mètres.

## Claims

1. A moving device for intervening inside small-diameter pipework, the device comprising a drive piston (1) made up of at least two annular tractor cups (3) each having a flexible and strong peripheral skirt (41) of the same outside diameter, and each defining a sealed section of inside surface, the device being characterized in that said drive piston (1) includes at least a third non-sealing centering cup (4) disposed between said two tractor cups (3), and in that the supports (10) for said cups (3, 4) are interconnected axially in pairs by means of a traction cable (5) and a fixed spring (6) that bears at each of its ends against said supports (10) for two consecutive cups, surrounding said cable (5) and putting it under tension when the device is in a position in which it is laterally flexed.

2. A device according to claim 1, characterized in that said drive piston (1) includes a third tractor annular cup (3) having the same diameter as the other two and situated at the leading end of said device.

3. A device according to claim 1 or 2, characterized in that said drive piston (1) includes a leading guide (2) whose outside surface is a surface of revolution and is rounded in shape, having a maximum outside diameter that is smaller than the minimum outside diameter of said cups (3, 4), and which is rigidly connected to the leading tractor cup (3).

4. A device according to any one of claims 1 to 3, characterized in that it includes at least one trailer module (23) made up of at least two non-sealing centering cups (4) situated one behind the other, having the same outside diameter, and both secured to a rigid body (24) that interconnects them, that supports them, and containing at least one piece of equipment for intervening in said pipework, which first trailer module (23) is connected at its leading end to said drive piston (1) and optionally at its trailing end to the following trailer module, and so on between trailer modules by means of a single chain (17) at each coupling, the chain comprising at least two links freely fixed to hooking supports (13) secured to the ends of said trailers (23), and one of said hooking supports being secured to the rear of the drive piston (1).

5. A device according to ay one of claims 1 to 4, characterized in that all of said cups (3, 4) are interchangeable on the same supports (10) and their minimum outside diameter is 50 mm.

6. A device according to claim 4, characterized in that at least one of the trailers ($23_1$) includes a central unit (40) associated with storage capacity for storing all of the measurement information picked up by any measurement system on beard said device, and the last trailer at the rear of the device includes a connector (26) enabling it to be connected to soy compatible external equipment in order to transfer the contents of said memory therein.

7. A device according to claim 4, characterized in that at least one of the trailers ($23_4$) includes an odometer (36) disposed between the two centering cups (4) of said trailer ($23_4$) supporting said wheel (36), which wheel is mounted on an arm (38) pivoting about an axis (37) and is associated with a return spring (35) urging it out from the volume in which said trailer ($23_4$) is inscribed, which arm (38) is also capable of being retracted into the trailer so as to enable said wheel (36) to be retracted into a cylindrical volume that is no greater than that which is occupied by the rigid body (24) of said trailer ($23_4$).

8. A device according to claim 4, characterized in that at least one of the trailers ($23_2$) includes an emitter coil ($29_1$) for creating a magnetic field around said trailer ($23_2$), the coil being disposed circularly around a portion of the rigid body (24) of the trailer and being externally protected by the skirt (41) of one of said centering cups (4) of said trailer ($23_2$).

9. A device according to claim 8, characterized in that at least one of the trailers ($23_3$) includes a receiver coil ($29_2$) for measuring the magnetic field created by the emitter coil ($29_1$), and likewise circularly disposed around a portion of the rigid body (24) of said trailer ($23_3$) and protected by the skirt (41) of one of said centering cups thereof.

10. A moving device according to claim 9, characterized in that it comprises at least five trailer modules (23) connected one behind the other and to said drive piston (1), at least one of the modules ($23_1$) including an electrical battery (27), another module ($23_2$) including at least one magnetic field emitting coil (29), another module ($23_3$) including said magnetic field receiving coil (29), another module ($23_4$) including a distance-measuring odometer wheel, and another of said modules ($23_5$) including a central unit (40) associated with a storage capacity, the overall length of the device not exceeding 1.50 meters.

**Patentansprüche**

1. Bewegliche Vorrichtung für Arbeiten im Inneren von Rohrleitungen mit kleinem Durchmesser, mit einem Antriebskolben (1), der aus mindestens zwei ringschüsselförmigen Zugkörpern (3) zusammengesetzt ist, die jeweils eine Umfangsschürze (41) mit dem selben Außendurchmesser aufweisen, die weich und beständig ist sowie jeweils einen inneren, dichten Oberflächenabschnitt begrenzt, dadurch gekennzeichnet, daß der genannte Antriebskolben (1) mindestens einen dritten, nicht-dichten, schüsselförmigen Zentrierkörper (4) aufweist, der zwischen den beiden genannten, schüsselförmigen Zugkörpern (3) angeordnet ist, und daß die Träger (10) der genannten, schüsselförmigen Körper (3, 4) paarweise axial durch ein Zugseil (5) und eine Feder (6) verbunden sind, die festliegt und mit jedem ihrer Enden auf den genannten Trägen (10) zweier aufeinanderfolgender, schüsselförmiger Körper aufliegt, wobei sie in einer Lage seitlicher Biegung das genannte Seil (5) umgibt und unter Zugspannung setzt.

2. Vorrichtung nach Anspruch 1, dadurch gekennzeichnet, daß der genannte Antriebskolben (1) einen dritten, ringschüsselförmigen Zugkörper (3) mit demselben Durchmesser wie beiden andern aufweist, der am Kopf des genannten Schabers sitzt.

3. Vorrichtung nach irgendeinem der Ansprüche 1 oder 2, dadurch gekennzeichnet, daß der genannte Antriebskolben (1) eine vordere Führung (2) aufweist, deren Außenoberfläche eine abgerundete und rotationskörperartige Form aufweist, mit einem größten äußeren Durchmesser, der kleiner ist als der Mindestdurchmeser der genannten, schüsselförmigen Körper (3, 4) und der starr mit dem schüsselförmigen Zugkörper (3) am Kopf verbunden ist.

4. Vorrichtung nach irgendeinem der Ansprüche 1 bis 3, dadurch gekennzeichnet, daß sie mindestens ein Nachläufermodul (23) aufweist, das aus mindestens zwei schüsselförmigen, nicht-dichten Zentrierkörpern (4) zusammengesetzt ist, die hintereinanderliegend angeordnet sind, den selben Außendurchmesser haben und fest mit einem starren Körper (24) verbunden sind, der sie verbindet und abstützt, und mindestens eine Einrichtung für Arbeiten in der genannten Rohrleitung umfaßt, wobei das genannte erste Nachläufermodul (23) an der Vorderseite mit dem genannten Antriebskolben (1) und gegebenenfalls an der Rückseite mit dem nachfolgenden, dann miteinander und hintereinander, durch eine Kette (17) für die ständige Zusammenkoppelung, die mindestens zwei Kettenglieder aufweist, die frei an Verankerungsträgern (13) befestigt sind, die fest mit dem einen Ende eines der genannten Nachläufer (23) verbunden sind, und, was den einen angeht, mit der Rückseite des Schabers (1) verbunden sind.

5. Vorrichtung nach irgendeinem der Ansprüche 1 bis 4, dadurch gekennzeichnet, daß alle die genannten schüsselförmigen Körper (3, 4) auf den selben Trägern (10) auswechselbar sind, und daß ihr Mindest-Außendurchmesser 50 mm beträgt.

6. Vorrichtung nach Anspruch 4, dadurch gekennzeichnet, daß mindestens einer ($23_1$) der Nachläufer eine Zentraleinheit (40) aufweist, die einem Speicherglied zugeordnet ist, das es gestattet, alle Meßinformationen zu speichern, die durch jedes Meßsystem aufgenommen werden, das in der genannten Vorrichtung untergebracht ist, und daß der letzte Nachläufer, der an deren Rückseite gelegen ist, einen Anschluß (26) aufweist, der es gestattet, jede äußere, kompatible Einrichtung anzuschließen, um auf diese den Inhalt des genannten Speichers zu übertragen.

7. Vorrichtung nach Anspruch 4, dadurch gekennzeichnet, daß mindestens einer ($23_4$) der Nachläufer ein Streckenmeßrad (36) aufweist, das zwischen zwei schüsselförmigen Zentrierkörpern (4) des genannten Nachläufers ($23_4$) angeordnet ist, der das genannte Rad (36) trägt, daß dieses an einem Arm (38) angebracht ist, der um eine Achse (37) schwenkbar ist, und daß es einer Anstellfeder (35) zugeordnet ist, die danach trachtet, es zu veranlassen, aus dem Raum herauszutreten, in dem der genannte Nachläufer ($23_4$) aufgenommen ist, wobei dieser Arm (38) in dessen Inneres derart eintreten kann, daß das genannte Rad (36) in einen zylindrischen Raum einfällt, der höchstens gleich ist, dem, der vom starren Körper (24) des genannten Nachläufers ($23_4$) eingenommen ist.

8. Vorrichtung nach Anspruch 4, dadurch gekennzeichnet, daß mindestens einer ($23_2$) der Nachläufer eine Sendespule ($29_1$) aufweist, die ein Magnetfeld rund um den genannten Nachläufer ($23_2$) erzeugt, die kreisförmig um einen Abschnitt seines starren Körpers (24) angeordnet und nach außen durch die Schürze (41) eines der genannten, schüsselförmigen Zentrierkörper (4) des genannten Nachläufers ($23_2$) geschützt ist.

9. Vorrichtung nach Anspruch 8, dadurch gekennzeichnet, daß mindestens einer ($23_3$) der Nachläufer eine Empfangsspule ($29_2$) aufweist, die das Magnetfeld mißt, das von der Sendespule ($29_1$)

erzeugt ist, und ebenfallskreisförmig um einen Abschnitt des starren Körpers (24) des genannten Nachläufers (23₃) angeordnet und durch die Schürze (41) eines seiner genannten, schüsselförmigen Zentrierkörper geschützt ist.

10. Bewegliche Vorrichtung nach Anspruch 9, dadurch gekennzeichnet, daß sie mindestens fünf Nachläufermoduln (23) aufweist, die hintereinanderliegend mit dem genannten Antriebskolbem (1) verbunden sind, von denen der eine (23₁) zur Versorgung eine elektrische Batterie (27) aufweist, ein anderer (23₂) mindestens die Sendespule (29) für das Magnetfeld aufweist, ein anderer (23₃) die genannte Empfangsspule (29) für das Magnetfeld aufweist, eine andere (23₄) das Streckenmeßrad zur Streckenmessung aufweist, und ein anderer (23₅) eine Zentraleinheit (40) aufweist, die einem Speicherglied zugeordnet ist, wobei die Gesamtanordnung der Vorrichtung eine Maximallänge von 1,50 m aufweist.

# FIG.1

# FIG.2

# FIG.3

EP 0 760 717 B1

EP 0 760 717 B1

FIG.4

FIG.5

13

# FIG.6

# FIG.7

# FIG. 8

# FIG. 9